# EUROPEAN PATENT SPECIFICATION

(11) **EP 3 412 155 B1**
(45) Date of publication and mention of the grant of the patent: **23.04.2025**
(21) Application number: 17747504.3
(22) Date of filing: 02.02.2017
(51) Int. Cl.: A23L 7/157

(54) **METHOD FOR PRODUCING MODIFIED WHEAT FLOUR FOR FRIED FOOD COATING AND COATING MATERIAL FOR COATED FRIED FOOD**
VERFAHREN ZUR HERSTELLUNG VON MODIFIZIERTEM WEIZENMEHL FÜR DIE BESCHICHTUNG VON FRITTIERTEN LEBENSMITTELN UND BESCHICHTUNGSMATERIAL FÜR BESCHICHTETE FRITTIERTE LEBENSMITTEL
MÉTHODE DE PRODUCTION DE FARINE DE BLÉ MODIFIÉE POUR L'ENROBAGE D'ALIMENTS FRITS ET MATÉRIAU D'ENROBAGE D'ALIMENTS FRITS ENROBÉS

(30) Priority: 02.02.2016 JP 2016018157
(43) Date of publication of application: 12.12.2018
(73) Proprietor: Nisshin Seifun Welna Inc., Tokyo 101-8441 (JP)
(72) Inventor: FUJIMURA, Ryosuke, Tokyo 103-8544 (JP); OHMURA, Masato, Tokyo 103-8544 (JP); HIWATASHI, Souichiro, Tokyo 103-8544 (JP); SAKAKIBARA, Michihiro, Tokyo 103-8544 (JP)
(74) Representative: Forstmeyer, Dietmar
(86) International application number: PCT/JP2017/003721
(87) International publication number: WO 2017/135353

(56) References cited:
- EP-A1- 3 170 407
- WO-A1-2016/010059
- JP-A- H0 884 568
- JP-A- S61 239 851
- JP-B2- 5 107 294
- KR-B1- 101 307 948
- HYMA GAJULA ET AL: "Pre-Cooked Fiber-Enriched Wheat Flour Obtained by Extrusion: Rheological and Functional Properties", INTERNATIONAL JOURNAL OF FOOD PROPERTIES, vol. 12, no. 1, 1 January 2009 (2009-01-01), US, pages 27 - 44, XP055608321, ISSN: 1094-2912, DOI: 10.1080/10942910802227017
- SAK-HON YUN ET AL: "RVA pasting properties of Australian wheat starches.", STARCH/STAERKE, vol. 51, no. 8/9, 1999, pages 274, XP002793193
- ANONYMOUS: "Measure Performance of Ingredients and Finished Products", 2015, XP002793192, Retrieved from the Internet <URL:https://www.perten.com/Global/Brochures/RVA/RVA%20Method%20Brochure_20151110.pdf> [retrieved on 20190724]

## Description

### Technical Field

This invention relates to modified wheat flour that is obtained by modifying wheat flour and that is useful as a coating material for making fried foods, such as tempura and flour-coated deep-fried food. More particularly, it relates to modified wheat flour that is easily dispersible in water, is convenient for use in the preparation of a food coating, and is able to provide fried foods having a crispy coating.

Coated and fried foods are foods prepared by coating a food substrate with a coating and heating (i.e., frying) the coated substrate in oil. Coated and fried foods have specific flavor and texture resulting from the cooking mechanism. That is, the substrate is heated as if it is steamed in the coating while being kept away from direct contact with oil during cooking, i.e., heating in oil, and, therefore, the taste of the substrate is condensed, and the coating absorbs the high temperature oil to develop a brown color and a pleasant flavor. However, in order to make a coated fried food with the specific flavor and texture, a cook is required to have high skill of oil temperature control, food preparation before cooking including sizing, coating manipulation including the amount of the coating to be applied, the viscosity of the coating, and the degree of mixing the coating ingredients. Most home cooks rarely prepare coated fried food based on such a high level of experience and often have unfortunate cooking results, for example, the fried coating is thick and hard or easily pulls away from the substrate to have a poor appearance.

The preparation of coated fried food usually involves making a liquid coating (batter) by mixing flour composed mainly of wheat flour with water and applying the batter to a substrate. Because batter quality greatly changes with time, the batter should be used immediately after the preparation. However, it often takes time to prepare a batter because wheat flour is difficult to disperse in water and in the meantime, the batter changes with time during food preparation, often resulting in instable qualities of the resulting coated fried food. Approaches that have been taken to address this problem include using wheat flour with low gluten (wheat protein) and lowering the batter temperature, but the effects of these approaches are limited, and the problem is still waiting for solution.

With respect to the improvement of wheat flour for use in the preparation of coated fried food, Patent Literature 1 below discloses a granulated wheat flour composition for a tempura batter which comprises 100 parts by mass of wheat flour and 0.01 to 0.5 parts by mass of an emulsifying agent and having an average particle size of 100 to 180 µm. The composition is described as able to provide tempura that keeps good flavor and texture even after reheating.

Patent Literature 2 below discloses a coating composition for deep-fried food which comprises heat-treated wheat flour, oxidized starch, and a sucrose fatty acid ester. The composition is described as able to provide deep fried food, such as tempura, excellent in resistance to deterioration in flavor with time and resistance to microwave reheating.

Patent Literature 3 discloses heat-treated wheat flour for deep-fried food, in which the starch contained in the starting untreated wheat flour remains substantially ungelatinized, the gluten vitality of which is 90% to 98% of that of untreated wheat flour, and of which the degree of swelling of gluten is 105% to 155% of that of untreated wheat flour. The heat-treated wheat flour is described as able to provide tempura with a crispy coating even when cold as well as immediately after cooking.

Patent Literature 4 discloses heat-treated wheat flour for deep-fried food which is obtained by heat treating wheat flour having an RVA peak viscosity of 4700 mPa·s or more and which has a gluten vitality of 30% or less. The heat-treated wheat flour for deep-fried food of Patent Literature 4 was developed with an aim to improve the flavor and texture of deep-fried foods, such as tempura, and to improve adhesion of a coating to a substrate. The specified range of the RVA peak viscosity of the starting wheat flour, 4700 mPa·s or more, was decided from the viewpoint of the balance between adhesion and texture of the coating.

### Citation List

### Patent Literature

Patent Literature 1: JP 2000-69925A
Patent Literature 2: JP 2000-125794A
Patent Literature 3: JP 8-84568A
Patent Literature 4: JP 2010-233540A

### Summary of Invention

### Technical Problem

The techniques disclosed in Patent Literatures 1 to 4 aim improvement of wheat flour in common but are different in the basic method adopted. Patent Literature 1 uses addition of various additives to wheat flour. Patent Literatures 3 and 4 use heat treatment of wheat flour. Patent Literature 2 uses a combination of addition of additives and heat treatment. According to Patent Literatures 1 through 4, although the respective problems have been eliminated, and the respective effects have been shown, the level of coated fried food texture desired by consumers, such as the crisp texture, has recently been getting higher and higher. The techniques of Patent Literatures 1 to 4 still leave room for further improvement in order to meet such a high level of consumers' demand.

As discussed above, factors influential on the qualities of coated fried food include not only the raw materials, such as coating materials, but the skill of the cook. Even in using high quality coating materials, if a cook is so unskilled that he or she has trouble preparing a batter, the resulting coated fried food can leave a lot to be desired. Patent Literatures 1 to 4 give no particular consideration to the workability of coating materials in preparing coated fried food, also leaving room for improvement from this aspect. In this regard, improved wheat flour exhibiting good dispersibility in water has been desired as a coating material that provides good workability in preparing a coating, such as a batter, and makes coated fried food preparation easier.

Accordingly, an object of the present invention is to provide modified wheat flour that is easily dispersible in water with good workability in preparing a coating for coated fried food to provide coated fried food having a crispy coating and as well a method for production of such a modified wheat product.

### Solution to Problem

Wheat flour has the property that, when heated with water, the starch thereof is gelatinized and swells to have an increased viscosity. A rapid visco analyzer (RVA) is known as an instrument capable of rapid viscometric analysis assessing such viscosity characteristics (gelatinization characteristics) of wheat flour. In the analysis of wheat flour viscosity characteristics using the RVA (hereinafter referred to as RVA viscosity characteristics), a wheat flour sample to be analyzed is suspended in water, and the viscosity of the suspension is recorded while slowly heating under stirring. While the RVA viscosity characteristics of wheat flour generally vary depending on the type of wheat flour, the RVA viscosity profile common to many types of wheat flour is such that the viscosity does not largely change in the beginning of the RVA test, i.e., at relatively low temperatures but starts rising steeply at a certain temperature and reaches the peak, i.e., the maximum viscosity, followed by decreasing. In such RVA viscosity profiles, the temperature at which the viscosity starts increasing steeply is called a gelatinization onset temperature, and the maximum viscosity reached is called the RVA peak viscosity. The RVA viscosity characteristics of wheat flour largely depend on the gelatinization characteristics developed when the starch of wheat flour is heated and gelatinized. Nevertheless, because wheat flour contains not only starch but a plurality of components that influence the viscosity characteristics, such as proteins, the plurality of influential components comprehensively decides the RVA viscosity characteristics of wheat flour.

The inventors have studied suitability of wheat flour for use in the coated fried food preparation through experimentation to modify various wheat flour by, for example, heat treating under varying conditions. As a result, they have found that the characteristics especially important to be considered in solving the above problems are the RVA peak viscosity of heat-treated wheat flour, i.e., modified wheat flour and the difference in gelatinization onset temperature between before and after the heat treatment.

The present invention has been accomplished based on such finding. The present invention provides a coating material for coated fried food comprising modified heat treated wheat flour having a RVA peak viscosity of 3500 to 7000 mPa·s and a gelatinization onset temperature lower than that of the unmodified wheat flour by at least 10°C wherein the gelatinization onset temperature of the unmodified wheat flour is 70°C to 86°C.

The present invention also provides a method for modifying wheat flour for coated fried food including the step of subjecting unmodified wheat flour for coated and fried food having a RVA peak viscosity of 3000 to 4650 mPa·s to a modification treatment that causes the gelatinization onset temperature of the unmodified wheat flour to lower by at least 10°C. The invention is defined by appended claims 1-3.

### Advantageous Effects of Invention

The invention provides modified wheat flour having good dispersibility in water to provide good workability in food preparation and enables preparing coated fried food with a crispy coating.

### Description of Embodiments

The modified wheat flour for coated fried food according to the invention (hereinafter shortly referred to as the modified wheat flour of the invention) includes heat-treated wheat flour. That is, the modified wheat flour of the invention is obtained by subjecting wheat flour (unmodified wheat flour) to a heat treatment as a modifying treatment. Note that merely heating wheat flour does not always result in the production of the modified wheat flour of the invention, i.e., modified wheat flour having good dispersibility in water and capable of providing coated fried food with a crispy coating. As stated earlier, the RVA peak viscosity of the modified wheat flour and the difference in gelatinization onset temperature between before and after the heat treatment are important factors for obtaining the modified wheat flour of the invention, and it is necessary to adjust these factors within their respectively specified ranges.

The modified wheat flour of the invention is characterized, for one thing, by its RVA peak viscosity ranging from 3500 to 7000 mPa·s. The RVA peak viscosity of modified wheat flour is particularly influential on the texture of the coating of coated fried food prepared using the modified wheat flour. As long as the RVA peak viscosity is in the range of from 3500 to 7000 mPa·s, coated fried foods with a crispy coating texture are obtained. If the RVA peak viscosity of the modified wheat flour is less than 3500 mPa·s, the coating of the fried food tends to have a tacky texture. If the RVA peak viscosity is more than 7000 mPa·s, the coating tends to have a hard texture. The RVA peak viscosity of the modified wheat flour is preferably 4400 mPa·s or more, more preferably 5100 mPa or more, and preferably 6500 mPa·s or less, more preferably 6100 mPa·s or less.

The modified wheat flour of the invention is characterized, for another thing, by its gelatinization onset temperature at least 10°C lower than that of the unmodified wheat flour. The difference in gelatinization onset temperature between before and after the modification treatment (heat treatment) is particularly influential on the water dispersibility of the modified wheat flour. When the gelatinization onset temperature of the modified wheat flour is lower than that of the unmodified wheat flour by 10°C or more, the modified wheat flour exhibits improved water dispersibility. The modified wheat flour with so improved water dispersibility makes it easier to prepare a batter using the same, thereby enabling preparing a high-quality, coated fried food with efficiency. If the difference between the gelatinization onset temperature of modified wheat four and that of unmodified wheat flour, even if the former is lower than the latter, is smaller than 10°C, the effect of the modification treatment in improving the water dispersibility of wheat flour is insufficient. Improvement as desired on workability in preparing, for example, a batter for coated fried foods cannot be expected with such modified wheat flour. Coated fried foods prepared using such modified wheat flour will hardly have a crispy coating. The gelatinization onset temperature of the modified wheat flour of the invention is preferably lower than that of unmodified wheat flour by 10° to 20°C, more preferably by 12° to 18°C.

The gelatinization onset temperature of the modified wheat flour of the invention is preferably 60° to 70° C, in the interests of better workability and of making coated fried food with a crispy coating.

The RVA peak viscosity and the gelatinization onset temperature are determined using a rapid visco analyzer available from Newport Scientific Inc. in accordance with the following procedure.

In an aluminum canister (a sample container) provided with the rapid visco analyzer are put 4 g (14% moisture basis) of wheat four being analyzed and distilled water to make up a total of 29 g, and a stirring paddle is placed into the canister. The canister is inserted into the tower. When the moisture content of the sample flour is not 14%, the sample weight should be calculated so as to give a wheat solid content of 3.44 g. The canister is heated to raise the temperature of the contents (a wheat flour suspension) while rotating the paddle at 160 rpm/min, and the viscosity of the contents is recorded throughout to obtain a viscosity curve of the sample. The temperature profile consists of an initial holding time of 1 minute at 50°C , heating to 95°C in 7.5 minutes, a holding stage at 95°C for 5 minutes, lowering the temperature to 50°C in 7.5 minutes, followed by a final holding time of 2 minutes at 50°C. Based on the viscosity curve, the temperature at which the viscosity starts rising steeply and the maximum viscosity reached are taken as "gelatinization onset temperature" and "RVA peak viscosity", respectively.

The modified wheat flour of the invention preferably has a degree of gelatinization of 12% or lower, more preferably 10% or lower, even more preferably 9% or lower. Modified wheat flour with too high a degree of gelatinization provides, on mixing with water, a batter having relatively high consistency, which can reduce the workability in preparing coated fried food. Modified wheat flour with too high a degree of gelatinization also tends to provide coated fried food with too hard a coating. When modification of wheat flour is conducted by heating in the presence of water, the degree of gelatinization may sometimes increase, so that the heat treatment is preferably carried out such that the degree of gelatinization of the resulting modified wheat flour may be in the preferred range described above.

The modified wheat flour of the invention preferably has an average particle size of less than 200 µm, more preferably 35 to 120 µm, even more preferably 40 to 100 µm, in terms of the workability of the coating material containing the modified wheat flour and the improvement of the crisp texture of the fried coating. As used herein, the term "average particle size" refers to the volume average particle size as determined by the laser diffraction method. The average particle size can be determined using, for example, Microtrac MT3000II available from Nikkiso Co., Ltd.

The type of wheat flour that is to be modified is not limited as long as it is capable of producing, on being heat-treated (modified), modified wheat flour having a RVA peak viscosity and a difference in gelatinization onset temperature between before and after the heat treatment falling within their respective ranges as specified. One or a combination of two or more of wheat flour types commonly used in the preparation of coated fried food may be used, including weak flour, all-purpose flour, strong flour, and durum flour. In particular, weak flour and all-purpose flour are preferred in terms of workability of the resulting modified wheat flour and for obtaining coated fried food with a crispy coating.

The gelatinization onset temperature of the unmodified wheat flour is 70° to 86°C, more preferably 75° to 84°C, even more preferably 78° to 83°C, in the interests of obtaining modified wheat flour the gelatinization onset temperature of which is in the above recited preferred range and ensuring the difference in gelatinization onset temperature between before and after the heat treatment be in the above specified range.

The RVA peak viscosity of the unmodified wheat flour is preferably 3000 to 4650 mPa·s, more preferably 3250 to 4650 mPa·s, in the interests of ensuring the RVA peak viscosity of the resulting modified wheat flour and the difference in gelatinization onset temperature between before and after the heat treatment be in the above specified respective ranges. When there are different types of wheat flour originated from the same cultivar, they do not always have the same RVA peak viscosity and may vary in RVA peak viscosity depending on the differences in the amylopectin content, the starch qualities, the enzyme content, and the like. Therefore, in selecting wheat flour to be modified on the basis of the RVA peak viscosity, it is desirable to confirm the RVA peak viscosity of candidate wheat flour through a relatively simple test using the RVA without relying on the RVA peak viscosity estimated from the known RVA data of the cultivar of the candidate wheat.

The heat treatment (modification treatment) of wheat flour for obtaining the modified wheat flour of the invention must be such that the resulting modified wheat flour has an RVA peak viscosity ranging within the above specified range and shows the above specified difference in gelatinization onset temperature from the unmodified wheat flour. The heat treatment may be either a wet heat treatment or a dry heat treatment. The dry heat treatment is carried out by externally heating a container containing unmodified wheat flour and not containing water so as to positively evaporate the moisture content of the wheat flour. The wet heat treatment is conducted by heating unmodified wheat flour while maintaining the moisture content of the flour or while adding water thereto. For example, water is added to wheat flour and heated, or water vapor (saturated water vapor) is directly applied to wheat flour, thereby to heat the flour as a whole. The heat treatment is preferably such that the wheat flour that is powder is heated uniformly and preferably such that gelatinization of wheat flour and denaturation of the proteins are minimized. Heat treatments (1) to (5) described below present preferred modes of the heat treatment. Any of the treatments (1) to (5) may be designed to be a dry heat treatment when water is not added to wheat flour or a wet heat treatment when water is added, either of which may be selected as appropriate.

(1) Heat treatment using air or water vapor as a heating medium being brought into contact with wheat flour. In the heat treatment (1), the temperature of the heating medium is preferably 70° to 120°C, more preferably 75° to 110°C, even more preferably 77° to 103°C, and the treatment time, i.e., the heating medium contact time is preferably 1 to 120 sec., more preferably 1 to 60 sec., even more preferably 1 to 40 sec.
(2) Heat treatment in which wheat flour is introduced into a fluidized bed granulator and retained therein for a predetermined period of time while blowing hot air into the bed. In the heat treatment (2), the temperature of the hot air is, for example, 80° to 120°C, and the retention time of the wheat flour in the granulator is, for example, 1 to 40 sec. The fluidized bed granulator may be, for example, Horizontal Fluid Bed Dryer available from Okawara MFG Co., Ltd.
(3) Heat treatment in which wheat flour is heated by an IR heater while being conveyed on a vibrating conveyor.
(4) Heat treatment using a belt conveyor equipped with a heater capable of heating the upper side of the running belt. Wheat flour is placed on the conveyor belt and heated by the heater while being conveyed. Such a heating system may be composed of an ordinary belt conveyor and a separate heater, such as a heating pad, provided on the upper side of the conveyor belt.
   In the heat treatments (3) and (4), the temperature of the wheat flour being heated is, for example, 70° to 130°C, and the treating time is, for example, 10 to 120 sec.
(5) Heat treatment in which wheat flour is sealed in a sealable container, such as an aluminum pouch, and the pouch is heated using a heating medium, such as superheated water vapor or hot water or oil. In the heat treatment (5), in order to achieve uniform heating, it is preferred that the wheat flour be sealed in the container in a thin plate form with a thickness of about 5 mm or smaller. In the heat treatment (5), the temperature of the heating medium is, for example, 70° to 130°C, and the heating time is, for example, 10 to 120 sec.

The invention provides, in its another aspect, a method for modifying wheat flour for coated and fried food, including the step of subjecting wheat flour for coated and fried food having an RVA peak viscosity of 3000 to 4650 mPa·s, preferably 3250 to 4650 mPa·s, to a modification treatment that causes the gelatinization onset temperature of the starting unmodified wheat flour to lower by at least 10°C. By this modification method is provided the modified wheat flour of the invention. The modification treatment used in the modification method is preferably a heat treatment. The details of the heat treatment are as described for heat treamtent (5) wherein the heating medium is 70°C to 130°C, and the heating time is 10 to 120 sec.

The coating material for coated fried food of the invention is explained below.

The coating material of the invention contains the above described modified wheat flour of the invention. The coating material of the invention may be composed solely of the modified wheat flour of the invention or may contain, in addition to the modified wheat flour of the invention, any other ingredients commonly used in the coating of fried foods, such as unmodified wheat flour, sugars, cereal flour, starch, fats and oils, seasoning agents, spices, egg, thickening agents, emulsifying agents, and edible salt. One or two or more of these other ingredients may be used in combination.

The content of the modified wheat flour of the invention in the coating material of the invention is 70 to 99 mass%. Since the modified wheat flour of the invention is a product obtained by the modification of only wheat flour, it does not contain any unnecessary additive and therefore has high safety and quality stability in long term storage. The content of the modified wheat flour in the coating material of the invention is more preferably 80 to 98 mass%, even more preferably 88 to 97 mass%.

The coating material of the invention is useful in the preparation of coated fried foods, such as tempura, flour-coated deep-fried foods, fritters, croquettes, and breaded deep-fried meat cutlets. That is, the coating material of the invention may be tempura flour, *karaage* flour, or a like premix flour containing the modified wheat flour of the invention. Coated fried foods may be prepared using the coating material of the invention by, for example, applying the coating material to a desired food substrate and cooking the coated substrate by deep or shallow frying in oil. The coated substrate before being fried may be cold, chilled, or frozen stored or distributed before it needs to be cooked. The coated fried food prepared using the coating material of the invention may be served immediately after cooking or, if necessary, cold, chilled, or frozen stored or distributed until it needs to be served reheated.

The coating material of the invention can be applied to a substrate in a usual manner. For example, the coating material of the invention may be pressed directly onto the substrate or dusted over the substrate. The substrate on which the coating material of the invention is pressed or dusted may previously be coated with seasonings, dredging flour, beaten egg, a batter that may or may not contain the coating material of the invention, and the like. After preparing a batter containing the coating material of the invention, a substrate may be dipped in or sprayed with the batter. A batter containing the coating material of the invention can be prepared by mixing the coating material with a liquid, such as water or egg wash. For example, 100 parts by mass of the coating material is mixed with 50 to 200 parts by mass of water to make a batter. Since the coating material of the invention has very good dispersibility in water, it is uniformly applied directly to a substrate. Also, it is moderately dispersed to make a batter with no need to stir vigorously, therefore, the preparation of coated fried foods is thus accomplished extremely easily and conveniently.

The food items that can be coated and fried using the coating material of the invention are not particularly limited and include meats, such as beef, pork, chicken, and lamb; seafood, such as squids, octopuses, prawns, shrimps, salmon, mackerels, flatfishes, and shellfishes; and cereal grains, such as rice; vegetables including roots, such as soybeans, carrots, onions, pumpkins, potatoes, sweet potatoes, and mushrooms; and processed products of these food items.

### Examples

The invention will now be illustrated in greater detail with reference to Examples, but it should be understood that the invention is not construed as being limited thereto.

### Examples 1 to 6 and Comparative Example 1

Weak wheat flour having a gelatinization onset temperature of 80.7°C and an RVA peak viscosity of 4400 mPa·s as unmodified wheat flour was packed in a heat resistant pouch and shaped in a thin flat plate with a thickness of about 5 mm. After evacuating the air from the pouch, the pouch was sealed and put in a 100°C water bath to perform heat treatment of the flour for a varying period of time to produce modified wheat flour of Examples 1 to 6 and Comparative Example 1.

The modified wheat flour of each of Examples and Comparative Example had an average particle size of from 46 to 77 µm.

### Test Example

A panel of 10 members was asked to prepare a batter using each modified wheat flour sample of Examples and Comparative Example and evaluate the workability of the flour in the batter preparation. A batter was prepared by mixing 100 parts by mass of the modified wheat flour prepared in Examples and Comparative Example, 1.5 parts by mass of baking powder, and 170 parts by mass of water.

Sweet potatoes were cut into generally cuboid pieces measuring 1 cm × 1 cm × 5 cm. The cut pieces were dipped in the batter and deep-fried to make sweet potato tempura. The panel was asked to eat the resulting sweet potato tempura and evaluate the texture of the coating according to the scoring system below. The average of the scores given by the 10 panel members is shown in Table 1 below.

### Scoring system for evaluating workability in the preparation of batter:

5: Very good. The flour mixes well with water simply on stirring lightly.
4: Good. The flour mixes with water in a short time.
3: The flour disperses in a short time but with tendency to leave clumps.
2: Poor. The flour needs vigorous stirring to mix with water.
1: Very poor. The flour forms lasting clumps.

### Scoring system for evaluating coating texture:

5: Very crispy and extremely brittle.
4: Crispy and brittle.
3: Slightly less brittle. Soggy and hard.
2: Hard and not brittle.
1: Extremely hard, resilient, and very soggy.

**Table 1**

| | | Example | | | | | | Comparative Example 1 |
|---|---|---|---|---|---|---|---|---|
| | | 1 | 2 | 3 | 4 | 5 | 6 | |
| RVA Peak Viscosity of Unmodified Wheat Flour (mPa·s) | | 4400 | 4400 | 4400 | 4400 | 4400 | 4400 | 4400 |
| Gelatinization onset temperature of unmodified wheat flour (°C) | | 80.7 | 80.7 | 80.7 | 80.7 | 80.7 | 80.7 | 80.7 |
| RVA Peak Viscosity of Modified Wheat Flour (mPa·s) | | 4410 | 4550 | 4640 | 4660 | 4690 | 4770 | 4460 |
| "Gelatinization onset temperature of unmodified wheat flour (°C)" - "Gelatinization onset temperature of modified wheat flour (°C)" | | 10.3 | 12.0 | 14.5 | 17.9 | 19.7 | 21.7 | 9.3 |
| Evaluation Results | Workability | 3.9 | 4.4 | 4.6 | 4.4 | 4.0 | 3.8 | 2.2 |
| | Texture | 3.7 | 4.7 | 4.5 | 4.3 | 4.1 | 3.0 | 2.7 |

### Examples 7 to 12 and Comparative Examples 2 to 3

Modified wheat flour was produced in the same manner as in Examples 1 to 6 and Comparative Example 1, except for using unmodified wheat flour having a varying RVA peak viscosity and a varying gelatinization onset temperature. Each of the modified wheat flour samples obtained in Examples 7 to 12 and Comparative Examples 2 to 3 had an average particle size between and including 42 µm and 79 µm. Each modified wheat flour sample was evaluated in the same manner as described above. The results obtained are shown in Table 2.

**Table 2**

| | | Example | | | | | | Comparative. Example | |
|---|---|---|---|---|---|---|---|---|---|
| | | 7 | 8 | 9 | 10 | 11 | 12 | 2 | 3 |
| RVA Peak Viscosity of Unmodified Wheat Flour (mPa·s) | | 3490 | 4400 | 4400 | 4400 | 4600 | 4600 | 3300 | 4820 |
| Gelatinization onset temperature of unmodified wheat flour (°C) | | 82.3 | 80.7 | 80.7 | 80.7 | 78.5 | 78.5 | 81.0 | 76.8 |
| RVA Peak Viscosity of Modified Wheat Flour (mPa·s) | | 3520 | 4420 | 5550 | 6080 | 6500 | 6900 | 3330 | 7080 |
| "Gelatinization onset temperature of unmodified wheat flour (°C)" - "Gelatinization onset temperature of modified wheat flour (°C)" | | 10.5 | 11.4 | 14.2 | 15.8 | 14.5 | 13.0 | 12.0 | 13.5 |
| Evaluation Results | Workability | 3.7 | 4.0 | 4.5 | 4.2 | 4.1 | 3.8 | 2.9 | 1.8 |
| | Texture | 3.6 | 4.2 | 4.7 | 4.6 | 4.3 | 4.0 | 2.2 | 2.5 |

### Examples 13 to 20

Modified wheat flour was produced in the same manner as in Examples 1 to 6 and Comparative Examples 1 and 2, except for using unmodified wheat flour having a varying RVA peak viscosity and a varying gelatinization onset temperature. Each of the modified wheat flour samples obtained in Examples 13 to 20 had an average particle size between and including 40 µm and 88 µm. Each modified wheat flour sample was evaluated in the same manner as described above. The results obtained are shown in Table 3.

**Table3**

| | | Example | | | | | | | |
|---|---|---|---|---|---|---|---|---|---|
| | | 13 | 14 | 15 | 16 | 17 | 18 | 19 | 20 |
| RVA Peak Viscosity of Unmodified Wheat Flour (mPa·s) | | 2930 | 2980 | 3060 | 3290 | 4720 | 4940 | 4960 | 5050 |
| Gelatinization onset temperature of unmodified wheat flour (°C) | | 82.8 | 86.2 | 83.3 | 82.0 | 80.1 | 79.9 | 74.6 | 78.5 |
| RVA Peak Viscosity of Modified Wheat Flour (mPa·s) | | 4520 | 4510 | 4660 | 4850 | 5080 | 5070 | 5750 | 6280 |
| "Gelatinization onset temperature of unmodified wheat flour (°C)" - "Gelatinization onset temperature of modified wheat flour (°C)" | | 14.5 | 13.9 | 10.4 | 12.2 | 11.8 | 10.5 | 12.7 | 16.0 |
| Evaluation Results | Workability | 3.4 | 3.2 | 4.1 | 4.3 | 3.4 | 3.2 | 3.2 | 3.2 |
| | Texture | 3.7 | 3.2 | 4.3 | 4.3 | 3.7 | 3.6 | 3.4 | 3.3 |

## Claims

1. A method for producing modified wheat flour for coated fried food, comprising a step of subjecting unmodified wheat flour having an RVA peak viscosity of 3000 to 4650 mPa·s to the following heat treatment:
sealing said unmodified wheat flour in a sealable container, and heating said container with a heating medium, wherein the temperature of the heating medium is 70° to 130°C, and the heating time is 10 to 120 sec;
wherein the modified wheat flour has an RVA peak viscosity of 3500 to 7000mPa·s, and a gelatinization onset temperature which is at least 10°C lower than that of the unmodified wheat flour; and
wherein the RVA peak viscosity and the gelatinization onset temperature are determined according to the method disclosed in the description.

2. The method according to claim 1, wherein the unmodified wheat flour has a gelatinization onset temperature of 70° to 86°C.

3. A coating material for coated fried food comprising modified wheat flour in an amount of 70 to 99 mass%; and at least one further ingredient selected from the group comprising unmodified wheat flour, sugars, cereal flour, starch, fats and oils, seasoning agents, spices, egg, thickening agents, emulsifying agents, edible salt, and baking powder;
wherein the modified wheat flour is made of heat-treated wheat flour having a RVA peak viscosity ranging from 3500 to 7000 mPa·s, and a gelatinization onset temperature which is at least 10°C lower than that of the unmodified wheat flour;
wherein the gelatinization onset temperature of the unmodified wheat flour is 70 to 86°C; and
wherein the RVA peak viscosity and the gelatinization onset temperature are determined according to the method disclosed in the description.

## Patentansprüche

1. Verfahren zur Herstellung von modifiziertem Weizenmehl für beschichtete, frittierte Lebensmittel, umfassend einen Schritt, bei dem unmodifiziertes Weizenmehl mit einer RVA-Spitzenviskosität von 3000 bis 4650 mPa.s der folgenden Wärmebehandlung unterzogen wird:
Versiegeln des unmodifizierten Weizenmehls in einem verschließbaren Behälter und Erhitzen des Behälters mit einem Heizmedium, wobei die Temperatur des Heizmediums 70 ° bis 130 °C und die Erhitzungsdauer 10 bis 120 Sekunden beträgt;
wobei das modifizierte Weizenmehl eine RVA-Spitzenviskosität von 3500 bis 7000 mPa.s und eine Temperatur des Gelatinierungsbeginns aufweist, die mindestens 10 °C niedriger ist als die des unmodifizierten Weizenmehls; und
wobei die RVA-Spitzenviskosität und die Temperatur des Gelatinierungsbeginns gemäß dem in der Beschreibung offenbarten Verfahren bestimmt werden.

2. Verfahren nach Anspruch 1, wobei das unmodifizierte Weizenmehl eine Gelatinierungstemperatur von 70 ° bis 86 °C aufweist.

3. Beschichtungsmaterial für beschichtete frittierte Lebensmittel, umfassend modifiziertes Weizenmehl in einer Menge von 70 bis 99 Massenprozent und mindestens einen weiteren Bestandteil, der aus der Gruppe ausgewählt ist, die unmodifiziertes Weizenmehl, Zucker, Getreidemehl, Stärke, Fette und Öle, Gewürzmittel, Gewürze, Ei, Verdickungsmittel, Emulgatoren, Speisesalz und Backpulver umfasst;
wobei das modifizierte Weizenmehl aus wärmebehandeltem Weizenmehl mit einer RVA-Spitzenviskosität im Bereich von 3500 bis 7000 mPa.s und einer Gelatinierungstemperatur hergestellt ist, die mindestens 10 °C niedriger ist als die des unmodifizierten Weizenmehls;
wobei die Temperatur des Gelatinierungsbeginns des unmodifizierten Weizenmehls 70 bis 86 °C beträgt; und
wobei die RVA-Spitzenviskosität und die Temperatur des Gelatinierungsbeginns nach dem in der Beschreibung offenbarten Verfahren bestimmt werden.

## Revendications

1. Méthode de production de farine de blé modifiée pour les aliments frits enrobés, comprenant une étape comprenant soumettre la farine de blé non modifiée ayant une viscosité maximale RVA de 3 000 à 4 650 mPa.s au traitement thermique suivant:
sceller ladite farine de blé non modifiée dans un récipient scellable, et chauffer ledit récipient à l'aide d'un agent chauffant, la température de l'agent chauffant étant de entre 70 ° à 130°C, et la durée du chauffage étant de 10 à 120 sec;
dans laquelle la farine de blé modifiée présente une viscosité maximale RVA de 3500 à 7000 mPa.s, et une température de début de gélatinisation inférieure d'au moins 10 °C à celle de la farine de blé non modifiée; et
dans lequel la viscosité maximale de la RVA et la température de début de gélatinisation sont déterminées selon la méthode décrite dans la description.

2. Méthode selon la revendication 1, dans laquelle la farine de blé non modifiée a une température de début de gélatinisation de 70 ° à 86 °C.

3. Matériau d'enrobage pour aliments frits enrobés, comprenant de la farine de blé modifiée dans une proportion de 70 à 99 % en masse, et au moins un autre ingrédient choisi dans le groupe comprenant de la farine de blé non modifiée, des sucres, de la farine de céréales, de l'amidon, des graisses et des huiles, des agents d'assaisonnement, des épices, des œufs, des agents épaississants, des agents émulsifiants, du sel comestible et de la levure chimique;
dans lequel la farine de blé modifiée est constituée de farine de blé traitée thermiquement dont la viscosité maximale RVA est de 3500 à 7000 mPa.s et dont la température de début de gélatinisation est inférieure d'au moins 10 °C à celle de la farine de blé non modifiée;
dans lequel la température de début de gélatinisation de la farine de blé non modifiée est de 70 à 86 °C; et
dans lequel la viscosité maximale de la RVA et la température de début de gélatinisation sont déterminées selon la méthode décrite dans la description.
